# EUROPÄISCHE PATENTSCHRIFT

(11) **EP 2 417 650 B1**
(45) Veröffentlichungstag und Bekanntmachung des Hinweises auf die Patenterteilung: **07.05.2014**
(21) Anmeldenummer: 10716472.5
(22) Anmeldetag: 31.03.2010
(51) Int. Cl.: H01M 2/02, H01M 2/18, H01M 2/26, H01M 2/24, H01M 10/0525

(54) **ELEKTRODENGEOMETRIE EINER GALVANISCHEN ZELLE**
ELECTRODE SHAPE IN A GALVANIC CELL
FORME D'ÉLECTRODE D'UNE PILE GALVANIQUE

(30) Priorität: 07.04.2009 DE 102009016772
(43) Veröffentlichungstag der Anmeldung: 15.02.2012
(73) Patentinhaber: Li-Tec Battery GmbH, 01917 Kamenz (DE)
(72) Erfinder: SCHAEFER, Tim, 99768 Harztor (DE); JUNKER, Christian, 01468 Moritzburg (DE)
(74) Vertreter: Wallinger, Michael
(86) Internationale Anmeldenummer: PCT/EP2010/002069
(87) Internationale Veröffentlichungsnummer: WO 2010/115572

(56) Entgegenhaltungen:
- GB-A- 2 005 063
- JP-A- 2003 092 100
- JP-A- 2003 157 859
- JP-A- 2008 091 269
- US-A- 1 503 060

## Beschreibung

Die Erfindung betrifft eine galvanische Zelle gemäß dem Oberbegriff des Anspruches 1. Die Erfindung wird im Zusammenhang mit einer Li-Ionen Batterie zur Versorgung eines KFZ-Antriebs dargestellt. Es wird darauf hingewiesen, dass die Erfindung auch unabhängig von der Chemie, der Bauart der galvanischen Zelle oder der Art des versorgten Antriebs Anwendung finden kann.

Aus dem Stand der Technik sind Lithium-Ionen Batterien bekannt, deren galvanische Zellen infolge von insbesondere mechanischen Beschädigungen den übrigen Baugruppen der Batterie bzw. der Umgebung Schaden zufügen können. Beispielsweise können Chemikalien aus der Batterie austreten.

Galvanische Zellen, auf denen der Oberbegriff des Anspruchs 1 beruht, sind zum Beispiel aus der US 1,503,060 A oder der JP 2008-091269 A bekannt.

Die Aufgabe der Erfindung ist es, eine galvanische Zelle sicherer zu gestalten.

Diese Aufgabe wird gelöst von einer galvanischen Zelle mit den Merkmalen des Anspruchs 1. Bevorzugte und vorteilhafte Weiterbildungen sind Gegenstand der abhängigen Ansprüche.

Zur Lösung der Aufgabe wird eine galvanische Zelle vorgeschlagen, umfassend einen im Wesentlichen prismatischen Elektrodenstapel mit wenigstens:
- einer flächig ausgebildeten anodischen Elektrode,
- einer flächig ausgebildeten kathodischen Elektrode,
- und einem flächig ausgebildeten Separator, der zwischen diesen Elektroden angeordnet ist.

Erfindungsgemäß ist vorgesehen, dass der Separator an seinem Außenumriss wenigstens eine bezüglich dieses Außenumrisses nach innen versetzte Ausnehmung aufweist, und dass im Elektrodenstapel wenigstens eine Elektrode diese Ausnehmung überdeckt.

Im Sinne der Erfindung ist unter einer galvanischen Zelle eine Vorrichtung zu verstehen, welche auch zur Speicherung chemischer Energie und zur Abgabe elektrischer Energie dient. Dazu verfügt die erfindungsgemäße galvanische Zelle auch über einen Eiektrodenstapet und einen Elektrolyt. Auch kann die galvanische Zelle ausgestaltet sein, beim Laden elektrische Energie aufzunehmen. Man spricht dann auch von einer Sekundärzelle oder einem Akkumulator.

Im Sinne der Erfindung ist unter einem Elektrodenstapel eine Einrichtung zu verstehen, welche als Baugruppe einer galvanischen Zelle auch der Speicherung chemischer Energie und zur Abgabe elektrischer Energie dient. Vor der Abgabe elektrischer Energie wird gespeicherte chemische Energie in elektrische Energie gewandelt. Während des Ladens wird die dem Elektrodenstapel bzw. der galvanischen Zelle zugeführte elektrische Energie in chemische Energie gewandelt und abgespeichert. Dazu weist der Elektrodenstapel mehrere Schichten auf, wenigstens eine anodische Elektrode, eine kathodische Elektrode und eine Separatorschicht. Die Schichten sind übereinander gelegt bzw. gestapelt, wobei die Separatorschicht wenigstens teilweise zwischen einer Anodenschicht und einer Kathodenschicht angeordnet ist. Vorzugsweise wiederholt sich diese Abfolge der Schichten innerhalb des Elektrodenstapels mehrfach. Bevorzugt sind einige Elektroden miteinander insbesondere elektrisch verbunden, insbesondere parallel geschaltet. Vorzugsweise sind die Schichten zu einem Elektrodenwickel aufgewickelt. Nachfolgend wird der Begriff "Elektrodenstapel" auch für Elektrodenwickel verwendet.

Im Sinne der Erfindung ist unter einer anodischen Elektrode bzw. einer Anode eine Einrichtung zu verstehen, welche beim Laden Elektronen aufnimmt und/oder positiv geladene Ionen auch auf Zwischengitterplätzen einlagert. Vorzugsweise ist die Anode dünnwandig ausgebildet, besonders bevorzugt beträgt die Dicke der Anode weniger als 5% ihrer größten Kantenlänge. Vorzugsweise ist die Anode biegeschlaff. Vorzugsweise weist die Anode eine Metallfolie oder eine metallische Netzstruktur auf.

Im Sinne der Erfindung ist unter einer kathodischen Elektrode bzw. einer Kathode eine Einrichtung zu verstehen, welche beim Entladen bzw. während der Abgabe elektrischer Energie auch Elektronen und positiv geladene Ionen aufnimmt. Vorzugsweise ist die Kathode dünnwandig ausgebildet, besonders bevorzugt beträgt die Dicke der Kathode weniger als 5% ihrer größten Kantenlänge. Vorzugsweise ist die Kathode biegeschlaff. Vorzugsweise weist die Kathode eine Metallfolie oder eine metallische Netzstruktur auf. Vorzugsweise entspricht die Gestalt einer Kathode im Wesentlichen der Gestalt einer Anode des Elektrodenstapels. Die Kathode ist auch zur elektrochemischen Wechselwirkung mit der Anode bzw. mit dem Elektrolyt vorgesehen.

Im Sinne der Erfindung ist unter einer Separatorschicht bzw. einem Separator auch eine elektrisch isolierende Einrichtung zu verstehen, welche eine Anode von einer Kathode trennt und beabstandet. Die Separatorschicht bzw. der Separator nimmt auch einen Elektrolyt wenigstens teilweise auf, wobei der Elektrolyt vorzugsweise Lithium-Ionen enthält. Der Elektrolyt ist auch mit benachbarten Schichten des Elektrodenstapels elektrochemisch wirkverbunden. Vorzugsweise entspricht die Gestalt eines Separators im Wesentlichen der Gestalt einer Anode des Elektrodenstapels. Vorzugsweise ist ein Separator dünnwandig ausgebildet, besonders bevorzugt als mikroporöse Folie. Vorzugsweise ist die Separatorschicht bzw. der Separator mit einem Additiv benetzt, welches auch die Beweglichkeit der Separatorschicht bzw. des Separator erhöht. Besonders bevorzugt erfolgt die Benetzung mit einem ionischen Additiv. Vorzugsweise erstreckt sich die Separatorschicht bzw. der Separator wenigstens bereichsweise über eine Begrenzungskante wenigstens einer Elektrode. Besonders bevorzugt erstreckt sich die Separatorschicht bzw. der Separator über sämtliche Begrenzungskanten benachbarter Elektroden hinaus.

Im Sinne der Erfindung ist unter einer Ausnehmung ein Bereich einer Schicht des Elektrodenstapels zu verstehen, welcher bzgl. ihres Außenumrisses unvollständig ausgebildet ist bzw. fehlt. Vorzugsweise befindet sich eine solche Fehlstelle innerhalb des Außenumrisses und berührt oder schneidet erfindungsgemäß den Außenumriss. Der Außenumriss eines Separators oder auch einer Elektrode ist dessen bzw. deren Grundriss, bezogen auf eine Ebene, die quer und bevorzugt senkrecht zur Stapelrichtung ist. Vorzugsweise ist eine Ausnehmung auch bogenförmig begrenzt. Bevorzugt ist vorgesehen, dass eine Vielzahl von anodischen Elektroden, kathodischen Elektroden und Separatoren im Elektrodenstapel umfasst sind. Hierbei kann nur ein Separator mit wenigstens einer Ausnehmung oder mehrere Separatoren mit wenigstens einer Ausnehmung vorgesehen sein. Bevorzugt sind alle Separatoren mit wenigstens einer Ausnehmung ausgebildet.

Ein Vorteil der erfindungsgemäßen Lösung ist darin zu sehen, dass durch eine Ausnehmung im Separator Platz insbesondere für die Kontaktierung einer Elektrode geschaffen wird. Die Kontaktierungen ragen so nur teilweise aus dem Außenumriss des Elektrodenstapels heraus. Bei erfindungsgemäßer Ausführung einer galvanischen Zelle können die Kontaktierungen in geschützten Bereichen einer Batterie angebracht werden, welche bei einem Unfall des Kraftfahrzeugs schädigenden Einflüssen mit geringerer Wahrscheinlichkeit ausgesetzt sind. Die Betriebssicherheit einer galvanischen Zelle wird bei Auftreten von schädigenden Kräften, etwa bei einem Unfall des Kraftfahrzeugs, insbesondere dadurch erhöht, dass auch die Kontaktierungen in geschützten Bereichen einer galvanischen Zelle bzw. einer Batterie angeordnet sind. So wird die zugrunde liegende Aufgabe gelöst.

Nachfolgend werden weitere vorteilhafte Ausführungsformen der Erfindung beschrieben.

Erfindungsgemäß ist eine Ausnehmung eines Separators von wenigstens einer Elektrode desselben Elektrodenstapels im Wesentlichen überdeckt. Die Elektrode steht im Bereich der Ausnehmung des Separators über und hinterdeckt oder verdeckt in der Draufsicht diese Ausnehmung im Separator. Die Formulierung "im Wesentlichen" bedeutet hierbei, dass die Ausnehmung im Separator nicht voltständig überdeckt sein muss. Bevorzugt handelt es sich bei der Elektrode um eine im Elektrodenstapel zum Separator benachbarte Elektrode. Damit wird auch die Zugänglichkeit zur elektrischen Kontaktierung der die Ausnehmung überdeckenden Elektrode verbessert. Damit sind z.B. andere elektrische Kontaktierungsmittel und/oder eine größere Kontaktierungsfläche als im Stand der Technik möglich, was die Sicherheit verbessert. Vorzugsweise ragt der Bereich der Kontaktierungen der Elektroden nicht über den Außenumriss des Elektrodenstapels hinaus.

Vorteilhaft ist vorgesehen, dass der Separatorwenigstens zwei Ausnehmungen aufweist, von denen im Elektrodenstapel eine erste Ausnehmungen von einer anodischen Elektrode und eine zweite Ausnehmungen von einer kathodischen Elektrode Im Wesentlichen überdeckt ist. Bevorzugt handelt es sich hierbei um die zum Separator benachbarten Elektroden.

Vorteilhaft ist vorgesehen, dass der Elektrodenstapel eine Vielzahl von Separatoren umfasst, deren Ausnehmungen abwechselnd und bevorzugt wechselseitig von einer anodischen Elektrode und einer kathodischen Elektrode im Wesentlichen überdeckt sind. Auch hierbei erfolgt die Überdeckung bevorzugt durch die zum Separator benachbarten Elektroden. Dadurch kann die Sicherheit der erfindungsgemäßen galvanischen Zelle weiter verbessert werden. Dies wird nachfolgend im Zusammenhang mit den Figuren noch näher erläutert.

Vorteilhaft ist vorgesehen, dass die Elektroden und der Separator an ihrem Außenumriss jeweils wenigstens eine bezüglich dieses Außenumrisse nach innen versetzte Ausnehmung aufweisen, welche im Elektrodenstapel im Wesentlichen übereinanderliegend angeordnet bzw. ausgerichtet sind. Ein Vorteil dieser Lösung ist darin zu sehen, dass die im Elektrodenstapel übereinanderliegenden Ausnehmungen Bauraum bereitstellen, der für sicherheitserhöhende Maßnahmen genutzt werden kann, wie nachfolgend noch näher erläutert. ohne dass hierbei die äußeren baulichen Abmessungen der galvanischen Zelle verändert werden müssen. Im Stand der Technik führen sicherheitserhöhende Maßnahmen hingegen häufig zu einem konstruktive Außenaufmass und gehen somit zu Lasten der äußeren baulichen Abmessungen.

Vorteilhaft ist vorgesehen, dass die Elektroden jeweils einen im Wesentlichen rechteckigen Außenumriss bzw. Grundriss aufweisen und jeweils wenigstens eine Ausnehmung aufweisen. Bevorzugt sind die Elektroden derart im Elektrodenstapel angeordnet, dass die Ausnehmungen von wenigstens zwei Elektroden gleicher Polarität sich im Wesentlichen decken, dass die Ausnehmungen von Elektroden verschiedener Polarität sich aber nicht decken. Vorzugsweise weist der wenigstens eine Separator mehrere Ausnehmungen auf, welche vorgesehen sind, sich im Elektrodenstapel mit Ausnehmungen in Elektroden im Wesentlichen zu decken. Im Sinne der Erfindung ist unter "übereck" zu verstehen, dass im Elektrodenstapel eine erste Ausnehmung des wenigstens einen Separators mit einer Ausnehmung wenigstens einer ersten Elektrode zusammenfällt und von wenigstens einer Elektrode entgegengesetzter Polarität im Wesentlichen überdeckt wird. Eine zweite Ausnehmung des wenigstens einen Separators wird im Wesentlichen von wenigstens einer ersten Elektrode überdeckt und fällt mit einer Ausnehmung wenigstens einer Elektrode entgegengesetzter Polarität zusammen. Bevorzugt sind zwei Ausnehmungen eines Separators insbesondere an benachbarten Ecken des rechteckförmigen Außenumrisses ausgebildet. Die Formulierung "im Wesentlichen" bedeutet hier, dass auch geringfügige Abweichungen von einer Rechteckform möglich sind.

Vorteilhaft ist vorgesehen, dass wenigstens eine Ausnehmung eines Separators einen konkaven Verlauf bzw. eine konkave Kontur aufweist. Bevorzugt ist ebenso vorgesehen, dass wenigstens eine Ausnehmung einer Elektrode einen konvexen Verlauf bzw. eine konvexe Kontur aufweist. Diese Verläufe sind unter anderem in Hinblick auf mechanische Belastungen vorteilhaft. Insbesondere ist vorgesehen, dass die Verläufe, insbesondere auch an Übergangstellen, tangentenstetig ausgebildet sind.

Vorteilhaft ist vorgesehen, dass die im Elektrodenstapel übereinanderliegenden Ausnehmungen der Elektroden wenigstens einen Kanal ausbilden. Bevorzugt ist in dem Kanal wenigstens eine Poldurchführung angeordnet. Die Längsorientierung des Kanals entspricht im Wesentlichen der Stapelrichtung. Durch eine versetzte Anordnung der Ausnehmungen ist auch ein zur Stapelrichtung schräger Verlauf des Kanals möglich. Eine Poldurchführung im Sinne der Erfindung ist auch vorgesehen, Elektroden miteinander zu verbinden, insbesondere mehrere Elektroden gleicher Polarität. Vorzugsweise ist eine Poldurchführung elektrisch leitend ausgebildet, insbesondere mit einem Metall und/oder Graphit. Bevorzugt ist vorgesehen, dass der Querschnitt einer Poldurchführung an den Querschnitt des Kanals angepasst ist. Der Querschnitt definiert sich jeweils über Form und Flächengröße. Der Querschnitt des Kanals ist im Wesentlichen durch die Form der Ausnehmungen bestimmt. Der Querschnitt der Poldurchführung kann insbesondere oval, rund oder mehreckig sein. Bevorzugt ist vorgesehen, dass die Poldurchführung nicht über die Außenumrisse der Elektroden oder des Separators übersteht. Bevorzugt ist vorgesehen, dass der Querschnitt über der Längserstreckung der Poldurchführung konstant ist. Ein durch die Ausnehmungen gebildeter Kanal kann im übrigen auch zur Anordnung von elektrischen Leitungen und/oder eines Battery-Management-System (BMS) genutzt werden. Vorzugsweise weist wenigstens ein Bereich einer Elektrode, welcher im Elektrodenstapel eine Ausnehmung des wenigstens einen Separators im Wesentlichen überdeckt, einen Ausschnitt auf. Vorzugsweise ist dieser Ausschnitt im Bereich eines Kanals des Elektrodenstapels angeordnet. Vorzugsweise weisen jeweils wenigstens zwei Elektroden verschiedener Polarität je einen Ausschnitt auf. Vorzugsweise ist die Gestalt eines Ausschnitts an eine Poldurchführung angepasst. Vorzugsweise ist eine Poldurchführung durch mehrere Ausschnitte von Elektroden gleicher Polarität geführt. Vorzugsweise ist eine Poldurchführung im Bereich einer Durchführung mit einer Elektrode elektrisch leitend verbunden. Vorzugsweise decken sich die Ausschnitte mehrerer Elektroden gleicher Polarität.

Vorteilhaft wird vorzugsweise ein Separator verwendet, welcher aus einem stoffdurchlässigen Träger besteht, vorzugsweise teilweise stoffdurchlässig, also im Wesentlichen durchlässig in Bezug auf zumindest ein Material und im Wesentlichen undurchlässig in Bezug auf zumindest ein anderes Material. Der Träger ist auf mindestens einer Seite mit einem anorganischen Material beschichtet. Als stoffdurchlässiger Träger wird vorzugsweise ein organisches Material verwendet, welches vorzugsweise als nicht verwebtes Vlies ausgestaltet ist. Das organische Material, vorzugsweise ein Polymer und besonders bevorzugt Polyethylenterephthalat (PET), ist mit einem anorganischen ionenleitenden Material beschichtet, welches vorzugsweise in einem Temperaturbereich von -40° C bis 200° C ionenleitend ist. Das anorganische, ionenleitende Material umfasst bevorzugt wenigstens eine Verbindung aus der Gruppe der Oxide, Phosphate, Sulfate, Titanate, Silikate, Aluminosolikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf. Ein solcher Separator wird beispielsweise unter dem Handelsnamen "Separion" von der Evonik AG in Deutschland vertrieben.

Vorteilhaft ist vorgesehen, dass der Separator bezüglich des Außenumrisses der Elektroden übersteht. Der Separator steht bevorzugt mit einem im Wesentlichen gleichmäßigen Überstand mit bis zu 5 mm und besonders bevorzugt mit einem im Wesentlichen gleichmäßigen Überstand mit bis zu 3 mm über. Die angegebenen Überstandsbereiche haben sich im Testbetrieb einer erfindungsgemäßen galvanischen Zelle als besonders vorteilhaft erwiesen. Ungeachtet dessen weisen die Elektroden und die Separatoren eine im Wesentlichen deckungsgleiche Geometrien bzw. Außenumrisse auf, mit Ausnahme der jeweiligen Ausnehmungen, welche sich nur teilweise decken.

Vorteilhaft weist eine erfindungsgemäße galvanische Zelle eine Umhüllung mit einem Siegelbereich auf. Die Umhüllung dient auch dazu, den Elektrodenstapel sowie den Elektrolyt von der Umgebung insbesondere gasdicht zu trennen. Vorzugsweise ist diese Umhüllung im Siegelbereich mit dem Elektrodenstapel insbesondere stoffschlüssig verbunden. Vorzugsweise ist die Umhüllung im Siegelbereich mit zwei Elektroden unterschiedlicher Polarität insbesondere stoffschlüssig verbunden. Bevorzugt ist die Umhüllung als Verbundfolie ausgebildet. Bevorzugt weist die Verbundfolie auch ein Metall auf, insbesondere Aluminium. Vorzugsweise verläuft der Siegelbereich wenigstens teilweise entlang einer Ausnehmung einer Elektrode und/oder eines Separators. Vorzugsweise erstreckt sich wenigstens eine Elektrode wenigstens teilweise aus der Umhüllung. Vorzugsweise erstrecken sich wenigstens zwei Elektroden unterschiedlicher Polarität wenigstens teilweise aus der Umhüllung. Vorzugsweise weist ein sich aus der Umhüllung erstreckender Bereich einer Elektrode einen Ausschnitt auf. Vorzugsweise ist eine Poldurchführung durch diesen Ausschnitt geführt und mit der Elektrode im Bereich des Ausschnitts wenigstens elektrisch leitend verbunden. Vorzugsweise erstreckt sich ein Bereich wenigstens einer Elektrode mit einem Ausschnitt aus der Umhüllung. Vorzugsweise ist die Umhüllung im Bereich eines Ausschnitts in einer Elektrode gelocht und um dieses Loch mit dieser Elektrode insbesondere stoffschlüssig verbunden.

Vorteilhaft ist ein Siegelbereich unter Berücksichtung einer Beanspruchung, welche während des Betriebs der galvanischen Zelle auftritt, ausgeführt. Unter einer Beanspruchung des Siegelbereichs sind insbesondere auch Belastungen infolge Temperatur, Druck, auf die Umhüllung einwirkende Kräfte, Belastungen aus der Umgebung, Atomsphäre oder Chemikalien zu verstehen. Während des Betriebs kann insbesondere eine Scherbeanspruchung und/oder Schälbeanspruchung des Siegelbereichs auftreten, welcher durch deren angemessene Gestaltung zu begegnen ist. Vorzugsweise ist ein Siegelbereich bereichsweise breiter ausgebildet, insbesondere in Bereichen erhöhter Schubspannung. Vorzugsweise ist ein Siegelbereich im Bereich einer Ecke des Elektrodenstapels bzw. einer Elektrode breiter ausgebildet. Vorzugsweise ist insbesondere ein bogenförmiger Verlauf eines Siegelbereichs breiter ausgebildet. Vorzugsweise ist die Umhüllung im Siegelbereich bereichsweise mit größerer Wandstärke ausgebildet. So wird auch die dauerhafte Abdichtung der galvanischen Zelle verbessert.

Vorteilhaft weist eine Batterie wenigstens zwei erfindungsgemäße galvanische Zellen auf. Vorzugsweise bilden im Elektrodenstapel übereinanderliegende Ausnehmungen von Elektroden und/oder Separatoren wenigstens einen Kanal, in welchem wenigstens eine Poldurchführung angeordnet ist. Vorzugsweise erstrecken sich Bereiche mit einem Ausschnitt von wenigstens zwei Elektroden unterschiedlicher Polarität wenigstens einer galvanischen Zelle aus deren Umhüllung. Vorzugsweise sind zwei Ausnehmungen eines Separators von wenigstens zwei Elektroden unterschiedlicher Polarität, insbesondere von je einem Bereich zweier Elektroden unterschiedlicher Polarität mit jeweils wenigstens einem Ausschnitt, im Wesentlichen überdeckt. Vorzugsweise ist eine Poldurchführung durch Ausschnitte von Elektroden verschiedener galvanischer Zellen geführt und mit diesen wenigstens elektrisch leitend verbunden. Vorzugsweise weist eine Poldurchführung wenigstens zwei elektrisch leitende Bereiche auf, wobei diese wenigstens zwei Bereiche gegeneinander elektrisch isoliert sind. Vorzugsweise sind die wenigstens zwei galvanische Zellen mittels einer Poldurchführung inbesondere in Reihe geschaltet.

Vorzugsweise ist eine erfindungsgemäße galvanische Zelle in einem Kraftfahrzeug mit einem Elektroantrieb oder einem Hybridantrieb verbaut. Vorzugsweise ist eine erfindungsgemäße galvanische Zelle zur Versorgung eines Antriebs eine Kraftfahrzeugs verwendet.

Weitere Vorteile, Merkmale und Anwendungsmöglichkeiten der vorliegenden Erfindung ergeben sich aus der nachfolgenden beispielhaften Beschreibung in Zusammenhang mit den Figuren. Gleiche oder gleichwirkende Komponenten sind hierin mit denselben Bezugszeichen versehen. Es zeigen:
- Fig. 1: den schematischen Stapelaufbau einer galvanischen Zelle gemäß dem Stand der Technik in einer perspektivischen Ansicht;
- Fig. 2: die Anordnung von Elektroden und Separatoren gemäß einem ersten Ausführungsbeispiel der Erfindung in einer perspektivischen Ansicht;
- Fig. 3: einen Separator und benachbarte Elektroden gemäß dem Ausführungsbeispiel der Fig. 2 in einer Draufsicht;
- Fig. 4: die Anordnung von Elektroden und Separatoren gemäß einem zweiten Ausführungsbeispiel der Erfindung in einer perspektivischen Ansicht;
- Fig. 5: eine Elektrode gemäß dem Ausführungsbeispiel der Fig. 4 in einer Draufsicht;
- Fig. 6: eine alternative Ausführungsform einer Elektrode gemäß der Erfindung in einer Draufsicht;
- Fig. 7: eine weitere Ausführungsform einer Elektrode gemäß der Erfindung in einer Draufsicht;
- Fig. 8: eine erfindungsgemäße galvanische Zelle mit Umhüllung und Poldurchführungen in einer schematischen Schnittansicht;
- Fig. 9: eine weitere erfindungsgemäße galvanische Zelle mit Umhüllung in einer schematischen Schnittansicht;
- Fig. 10: Ausbildungen eines Siegelbereichs einer erfindungsgemäßen galvanische Zelle mit Umhüllung in einer Draufsicht;
- Fig. 11: eine weitere Ausführungsform einer erfindungsgemäßen galvanische Zelle mit angepassten Elektroden in einer Draufsicht;
- Fig. 12: eine weitere Ausführungsform einer erfindungsgemäßen galvanische Zelle mit angepassten Elektroden in einer Draufsicht,
- Fig. 13: die Elektrodenstapel zweier erfindungsgemäßer galvanischer Zellen in einer perspektivischen Ansicht,
- Fig. 14: eine Reihenschaltung vier erfindungsgemäßer galvanischen Zellen.

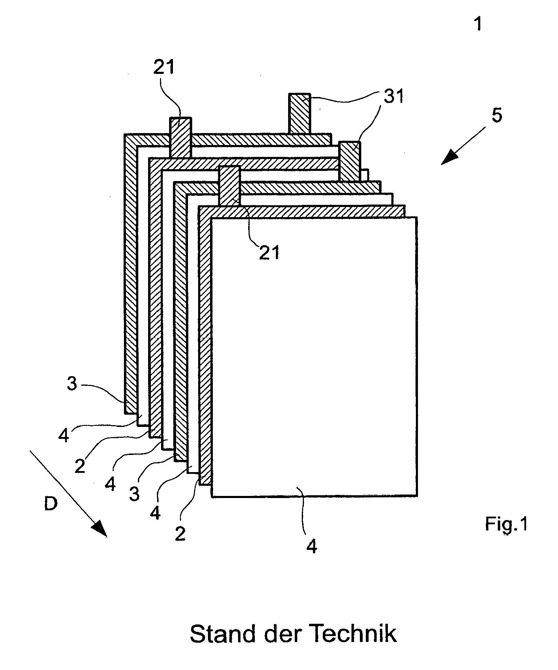

Fig.1 zeigt den Aufbau einer galvanischen Zelle 1 gemäß dem Stand der Technik. Diese umfasst eine Vielzahl von anodischen Elektroden 2, kathodischen Elektroden 3 und Separatoren 4, die als flache, rechteckförmige Stapelblätter ausgebildet und abwechselnd zu einem Elektrodenstapel 5 angeordnet bzw. gestapelt sind. Die Stapelrichtung ist mit dem Pfeil D angegeben.

Aus dem Stand der Technik sind unterschiedliche Anordnungsfolgen für die Stapelblätter bekannt. Die Elektroden 2 und 3 sind mit Kontaktelementen 21 und 31 versehen, die als Kontaktfähnchen ausgebildet sind und aus dem Elektrodenstapel 5 herausragen. Nicht gezeigte Poldurchführungen bzw. Ableiter verbinden die Kontaktelemente 21 und 31 mehrerer gleicher Elektroden 2 oder 3 miteinander. Diese Poldurchführungen dienen dem Einbringen eines Ladestroms und/oder dem Ableiten eines Nutzstroms. Nicht dargestellt ist eine Umhüllung für den Elektrodenstapel 5.

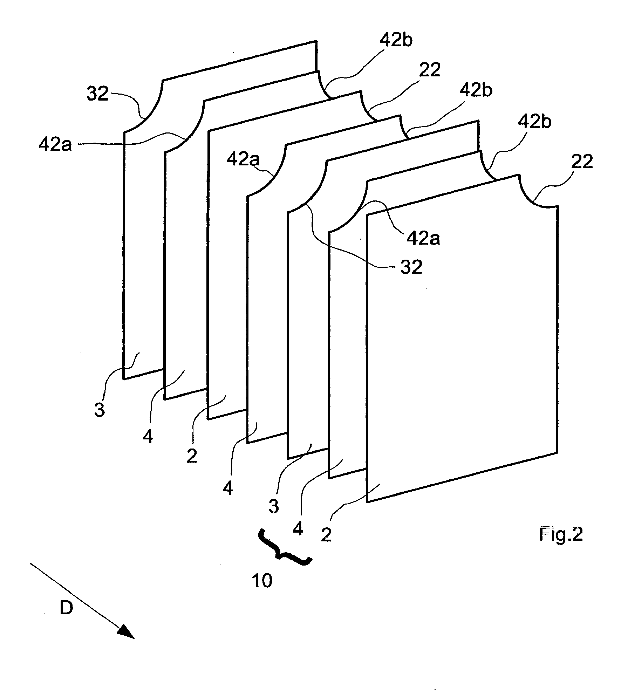

Fig. 2 zeigt die Anordnung von Elektroden 2 und 3 und Separatoren 4 gemäß einem ersten Ausführungsbeispiel der Erfindung. Die Separatoren 4 weisen jeweils zwei Ausnehmungen 42a und 42b auf, die gemäß der Darstellung im oberen Bereich rechts- und linksseitig übereck ausgebildet sind. Die anodischen Elektroden 2 weisen im oberen Bereich rechtsseitig jeweils eine Ausnehmung 22 auf. Die kathodischen Elektroden 3 weisen im oberen Bereich linksseitig jeweils eine Ausnehmung 32 auf. Mit jener oberen Ecke, welche keine Ausnehmung aufweist, überdecken die Elektroden 2 und 3 im Elektrodenstapel 5 jeweils eine Ausnehmung 42a oder 42b eines benachbarten Separators 4. Somit ergibt sich ein Aufbau des Stapels 5, bei dem die rechts- und linksseitigen Ausnehmungen 42a und 42b eines Separators 4 abwechselnd und wechselseitig von einer anodischen Elektrode 2 und einer kathodischen Elektroden 3 überdeckt sind. Durch diesen Aufbau kann, trotz der Ausnehmungen 22, 32, 42a und 42b die Gefahr eines elektrischen Kurzschlusses zwischen gegenpoligen Elektroden 2 und 3 verhindert werden. Andererseits ermöglichen die Ausnehmungen 22, 32, 42a und 42b eine bessere elektrische Kontaktierung der Elektroden 2 und 3, indem z.B. bisher nicht verwendete elektrische Kontaktierungsmittel eingesetzt werden und/oder eine größere Kontaktierungsfläche als im Stand der Technik ermöglich ist.

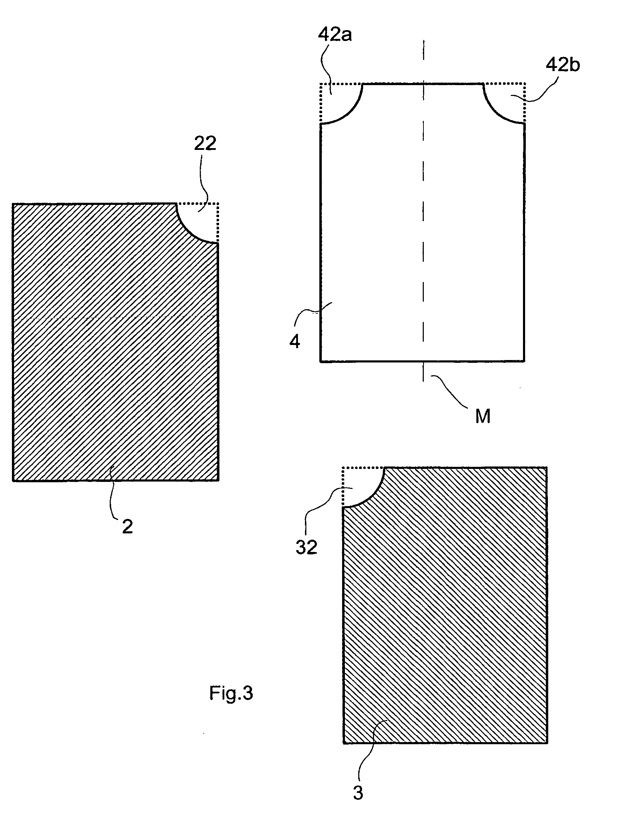

Fig. 3 zeigt einen im Ausführungsbeispiel der Fig. 2 verwendeten Separator 4 und verwendete Elektroden 2 und 3 in einer Draufsicht, d.h. mit Blickrichtung entgegen der Stapelrichtung D. Der Separator 4 ist um wenige Millimeter größer ausgebildet als die Elektroden 2 und 3 und steht im Elektrodenstapel 5 somit über die Außenumrisse der Elektroden 2 und 3 über, wie oben erläutert. Der Separator 4 weist zwei Ausnehmungen 42a und 42b auf. Diese Ausnehmungen 42a und 42b sind zu einer Mittellinie M im Wesentlichen spiegelsymmetrisch ausgebildet. Die anodische Elektrode 2 weist eine Ausnehmung 22 und die kathodische Elektrode 3 eine Ausnehmung 32 auf. Die Ausnehmungen 22, 32, 42a und 42b sind übereck ausgebildet und haben jeweils eine konkave Kontur. Die Ausnehmungen 22, 32, 42a und 42b können jedoch auch eine andere Form bzw. Kontur aufweisen, wie nachfolgend im Zusammenhang mit einem zweiten Ausführungsbeispiel noch näher erläutert.

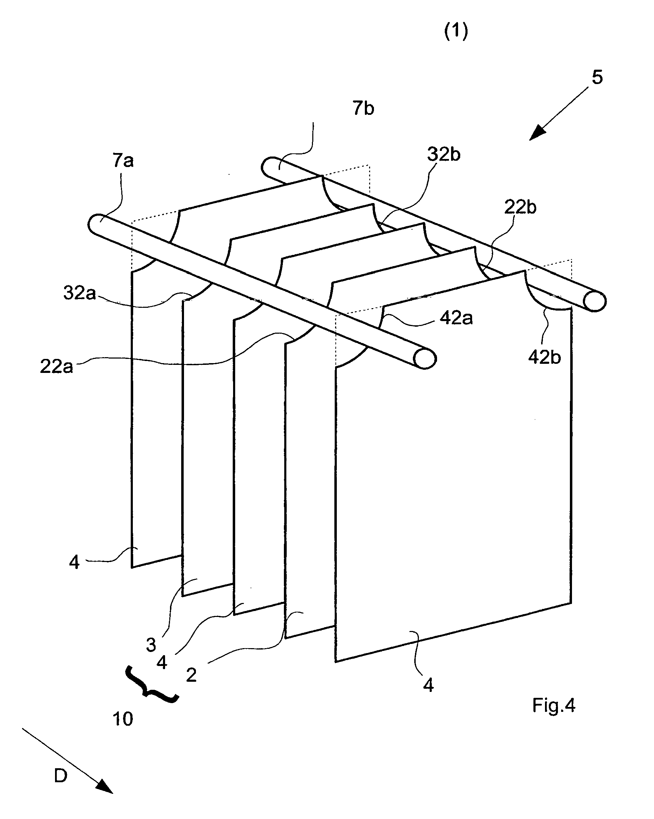

Fig. 4 zeigt die Anordnung von Elektroden 2 und 3 und Separatoren 4 gemäß einem zweiten Ausführungsbeispiel der Erfindung. Die Separatoren 4 und Elektrode 2 und 3 weisen jeweils zwei Ausnehmungen 42a, 42b, 22a, 22b, 32a und 32b auf, die an zwei benachbarten oberen Ecken übereck mit einem konkaven Verlauf ausgebildet sind. Die Separatoren 4 weisen eine zu den Elektroden 2 und 3 im Wesentlichen identische Geometrie auf, stehen jedoch auch hier bezüglich des Außenumrisses der Elektroden 2 und 3 über, bevorzugt mit einem gleichmäßigen Überstand, wie oben erläutert.

Im Elektrodenstapel 5 bilden die Ausnehmungen 22a, 22b und 32a, 32b der Elektroden 2 und 3, sowie die Ausnehmungen 42a und 42b der Separatoren 4 zwei Kanäle aus, in denen jeweils eine Poldurchführung 7a und 7b zur Kontaktierung der Elektroden 2 und 3 angeordnet ist. Die Poldurchführungen 7a und 7b sind hierbei jeweils nur mit den betreffenden Elektroden 2 oder 3 kontaktiert, was z.B. durch Form- und/oder Größenvariation der Ausnehmungen 22a, 22b, 32a und 32b und/oder sonstiger Kontaktierungsmittel erreicht werden kann. Die Kontaktierung ist nicht näher dargestellt.

Die in der Fig. 4 gezeigte Anordnung hat viele Vorteile: Aufgrund der Anordnung der Poldurchführungen 7a und 7b in den durch die Ausnehmungen 22a, 22b, 32a, 32b, 42a und 42b gebildeten Kanälen entfallen die aus dem Elektrodenstapel 5 herausragenden Kontaktelemente 21 und 31 der Elektroden 2 und 3, wie in Fig. 1 dargestellt. Die galvanische Zelle 1 kann somit bezüglich ihrer äußeren Abmessungen kompakter gestaltet werden. Die Poldurchführungen 7a und 7b sind derart angeordnet, dass diese über einen rechteckförmigen Außenumriss der Elektroden 2 und 3 und der Separatoren 4 nicht überstehen, was gleichfalls zu einer kompakten Bauform beiträgt. Bezogen auf ihre äußeren Abmessungen wird damit faktisch die Energiedichte der galvanischen Zelle 1 erhöht.

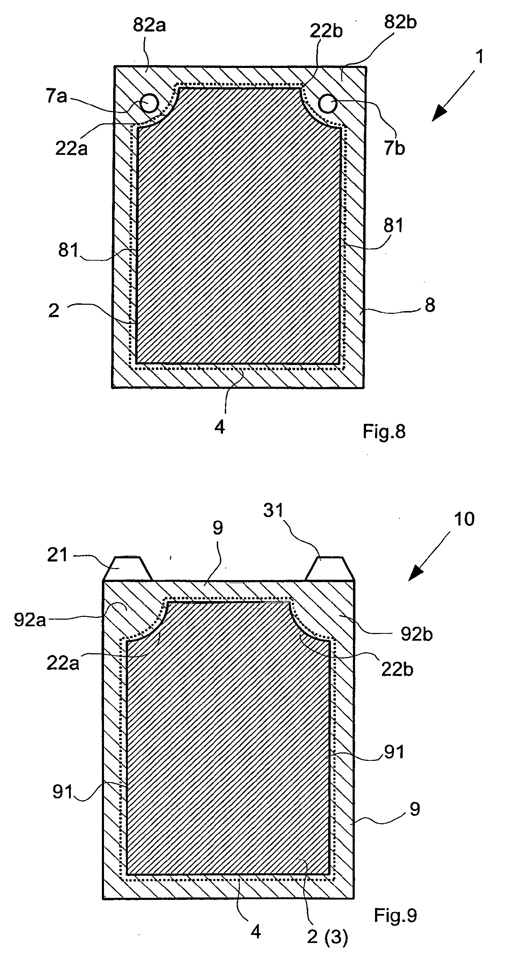

Zudem kann eine Umhüllung im Bereich der Ausnehmungen 22a, 22b, 32a, 32b, 42a und 42b massiver und damit robuster ausgeführt werden, was die lokale mechanische Festigkeit und damit die Sicherheit deutlich erhöht, ohne dass dies zu Lasten einer kompakten Bauform geht. Diese wird nachfolgend im Zusammenhang mit den Fig. 8 und 9 noch näher erläutert.

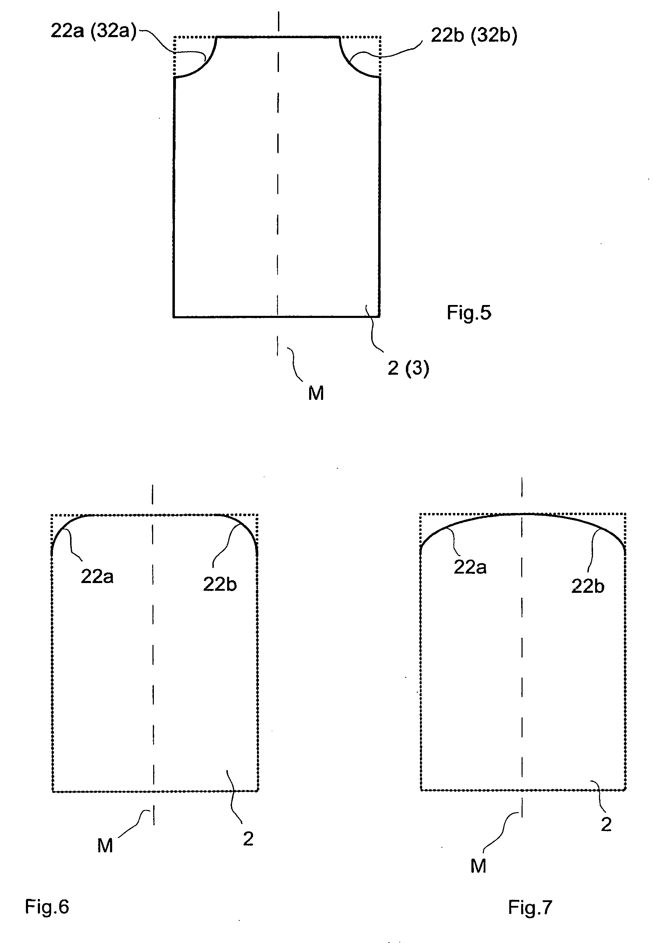

Fig. 5 zeigt eine Elektrode aus dem Ausführungsbeispiel der Fig. 4 in einer Draufsicht, d.h. mit Blickrichtung entgegen der Stapelrichtung D. Bei dieser Elektrode handelt es sich um eine anodische Elektrode 2 oder um eine kathodische Elektrode 3. Die Elektrode 2 bzw. 3 weist zwei Ausnehmungen 22a und 22b (bzw. 32a und 32b) auf, die an zwei benachbarten Ecken übereck mit einem konkaven Verlauf ausgebildet sind. Die Ausnehmungen 22a und 22b sind zu einer Mittellinie M der Elektrode 2 bzw. 3 im Wesentlichen spiegelsymmetrisch ausgebildet, wobei die Ausnehmungen 22a und 22b jedoch nicht zwingend identisch sein müssen. Ein Separator 4 weist eine im Wesentlichen identische Geometrie auf, unbeachtet seines Überstandes. In der Figur ist nicht dargestellt, dass eine Elektrode 2 vorzugsweise nur eine Ausnehmung 22a oder 22b aufweist, welche eine Ausnehmung eines im Elektrodenstapel benachbarten Separators im Wesentlichen überdeckt.

Fig. 6 zeigt eine abweichende Ausführungsform für eine Elektrode 2 bzw. 3. Die Ausnehmungen 22a und 22b weisen einen konvexen Verlauf auf. Ein zugehöriger Separator 5 ist bevorzugt in gleicher Weise gestaltet. Auch sind die Querschnitte der Poldurchführungen 7a und 7b bevorzugt an diese Ausnehmungen 22a und 22b angepasst. In der Figur ist nicht dargestellt, dass eine Elektrode 2 vorzugsweise nur eine Ausnehmung 22a oder 22b aufweist, welche eine Ausnehmung eines im Elektrodenstapel benachbarten Separators im Wesentlichen überdeckt.

Fig. 7 zeigt eine weitere Ausführungsform einer Elektrode 2 bzw. 3. Die Ausnehmungen 22a und 22b sind hier derart ausgebildet, dass diese im Wesentlichen bis zur Mittellinie M der Elektrode 2 reichen, wodurch die Elektrode 2 an ihrer oberen Außenumrisskante bogenförmig ausgebildet ist. Ein zugehöriger Separator 5 ist bevorzugt in gleicher Weise gestaltet. Eine solche Ausbildung ist im Hinblick auf die dortigen mechanischen Materialbelastungen insbesondere in einer Umhüllung besonders vorteilhaft, wie nachfolgend noch näher erläutert wird. In der Figur ist nicht dargestellt, dass eine Elektrode 2 vorzugsweise nur eine Ausnehmung 22a oder 22b aufweist, welche eine Ausnehmung eines im Elektrodenstapel benachbarten Separators im Wesentlichen überdeckt.

Wie in den Fig. 5, 6 und 7 gezeigt, ist die Ausbildung der Ausnehmungen 22a und 22b bzw. 32a und 32b an den oberen Ecken eine Elektrode 2 bzw. 3 bevorzugt. Gleiches gilt hinsichtlich einem Separator 4. Die Angabe "oben" bezieht sich auf die bevorzugt stehende Einbaulage. Abweichend hierzu können die Ausnehmungen 22a und 22b bzw. 32a und 32b auch an den unteren Ecken ausgebildet sein. Auch ist eine diagonale Anordnung möglich. Die Gestaltungs- und Anordnungsmöglichkeiten für die Ausnehmungen richten sich allgemein stets auch nach den räumlichen Möglichkeiten. Zudem kann auch nur eine Ausnehmung vorgesehen sein oder es können mehr als zwei Ausnehmungen vorgesehen sein. Anstelle eines rechteckförmigen Außenumrisses der Elektroden 2 und 3 ist auch ein abweichender Außenumriss möglich, wie z.B. eine Kreisform, Dreiecksform oder Tonneauform. Selbiges gilt für einen Separator 4.

Fig. 8 zeigt schematisch die Umhüllung einer galvanischen Zelle 1 in einer schematischen Schnittansicht. Die Umhüllung 8 umgibt die gestapelten Elektroden 2 und 3 und die überstehenden Separatoren 4 und führt gleichfalls den mechanischen Verbund der galvanischen Zelle 1 herbei. Die Umhüllung 8 kann mit den Elektroden 2 und 3 und den Separatoren 4 im Bereich deren Außenumrisskanten eine formschlüssige und/oder materialschlüssige Verbindung eingehen, was schematisch durch die gestrichelten Bereiche 81 angedeutet ist. Dies erhöht die mechanische Festigkeit der galvanischen Zelle 1.

Im Bereich der dargestellten Ausnehmungen 22a und 22b ist die Umhüllung 8 derart ausgebildet, dass sich für die galvanische Zelle 1 ein gewünschter rechteckförmiger Außenumriss ergibt, wodurch im Bereich dieser Ausnehmungen 22a und 22b eine Materialanhäufung 82a und 82b, d.h. eine erhöhte Wandstärke, aus Umhüllungsmaterial gegeben ist. Die Materialanhäufungen 82a und 82b erhöhen lokal die mechanische Festigkeit der galvanischen Zelle 1, ohne dass dies zu Lasten der äußeren baulichen Abmessungen geht.

In den Materialanhäufungen 82a und 82b der Umhüllung 8 sind die Poldurchführungen 7a und 7b integriert, wodurch diese fest fixiert und elektrisch hervorragend isoliert sind. Die Poldurchführungen 7a und 7b müssen jedoch nicht in diesen Bereichen angeordnet sein, sondern können z.B. auch seitlich verlaufen.

Fig. 9 zeigt die Umhüllung 9 einer galvanischen Zelle 10 aus einem Umhüllungsmaterial 9. Wie eingangs erläutert, ist eine galvanische Zelle 10 aus einer anodischen Elektrode (Anode) 2, einer kathodischen Elektrode (Kathode) 3 und einem zwischen diesen Elektroden angeordneten Separator 4 gebildet. Das Umhüllen dieser Einheit dient dem mechanischen Schutz der galvanischen Zelle 10 und soll ein Ablaufen und/oder Ausgasen von Elektrolyt verhindern. Bevorzugt ist die Umhüllung 9 aus einer Siegelfolie, insbesondere aus einer Verbundfolie ausgebildet.

Die Umhüllung 9 kann mit den Elektroden 2 und 3 und den Separatoren 4 im Bereich deren Außenumrisskanten eine formschlüssige und/oder materialschlüssige Verbindung eingehen, was schematisch durch die gestrichelten Bereiche 91 angedeutet ist. Dies erhöht die mechanische Festigkeit der galvanischen Zelle 10. Im Bereich der dargestellten Ausnehmungen 22a und 22b weist die Umhüllung 9 Materialanhäufungen 92a und 92b auf. Diese Materialanhäufungen 92a und 92b erhöhen lokal die mechanische Festigkeit der Umhüllung 9 und verbessern auch die Abdichtung in diesen kritischen Bereichen. Ferner kann eine etwaige Siegelnaht im Bereich dieser Ausnehmungen 22a und 22b breiter ausgebildet werden. Durch die Umhüllung 9 hindurch können, wie in Fig. 9 dargestellt, Kontaktelemente bzw. Kontaktfähnchen 21 und 31 ausgebildet sein. Die interne Kontaktierung ist nicht näher dargestellt.

Bei einer galvanischen Zelle mit rechteckförmigen Stapelblättern sind insbesondere die Eckbereiche einer Umhüllung 9 mechanisch hoch belastet, da hier beanspruchungsbedingt Schubspannungsspitzen im Umhüllungs- oder Einhausungsmaterial auftreten, die z.B. aus einer Torsionsbeanspruchung der galvanischen Zelle 1 resultieren. Durch die Materialanhäufungen von Einhausungs- oder Umhüllungsmaterial im Bereich der Ausnehmungen 22a, 22b, 32a, 32b, 42a und 42b wird lokal die mechanische Festigkeit in diesen Bereichen deutlich erhöht. Bevorzugt ist daher vorgesehen, etwaige Ausnehmungen in räumlicher Nähe zu solchen mechanisch hoch beanspruchten Bereichen anzuordnen. Der kantenfreie, z.B. konkave Verlauf einer Ausnehmung begünstigt zudem einen harmonischen Kraftfluss in diesen Bereichen.

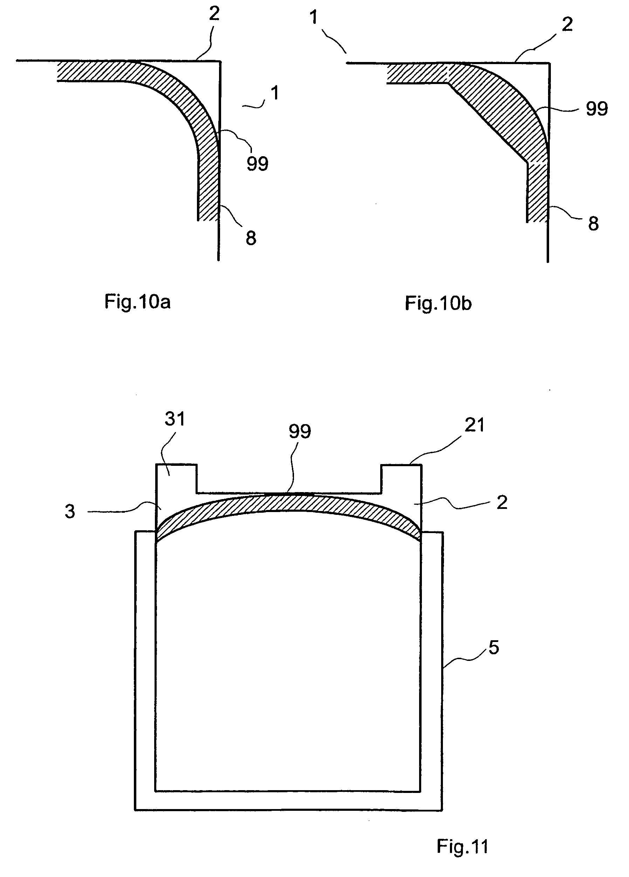

Fig.10 zeigt zwei Ausbildungen eines Siegelbereichs 99 einer erfindungsgemäßen galvanische Zelle 1, 10 mit Umhüllung 8, 9. Fig.10a zeigt, wie die Umhüllung 8, 9 im Bereich einer Ecke einer Elektrode 2, 3 vorzugsweise abgerundet verläuft. So kann ein Abschälen der Umhüllung 8, 9 von der Elektrode 2, 3 insbesondere in der Nähe einer Ecke der Elektrode 2, 3 verringert werden. Dabei weist der Siegelbereich 99 eine gleichmäßige Breite auf. Fig.10b zeigt, wie die Breite des Siegelbereichs 99 in der Nähe einer Ecke der Elektrode 2, 3 vorzugsweise insbesondere an den Schubspannungsverlauf angepasst ist.

Fig. 11 zeigt eine weitere Ausführungsform einer erfindungsgemäßen galvanische Zelle mit angepassten Elektroden 2, 3. Der Elektrodenstapel ist von der Umhüllung 8 umschlossen. Der Siegelbereich 99 ist an den abgerundeten Verlauf der die Umhüllung 8 begrenzenden Kante angepasst, wobei die Umhüllung 8 im Siegelbereich 99 an den Separator angepasst ist. Im Bereich einer Ecke ist eine Elektrode 2, 3 jeweils mit einem abgerundeten Kontaktfähnchen 21, 31 versehen. Die Kontaktfähnchen 21, 31 erstrecken sich vorzugsweise in einen Bereich der galvanischen Zelle bzw. der Batterie, welcher in geringerem Maß der Gefahr einer mechanischen Beschädigung ausgesetzt ist.

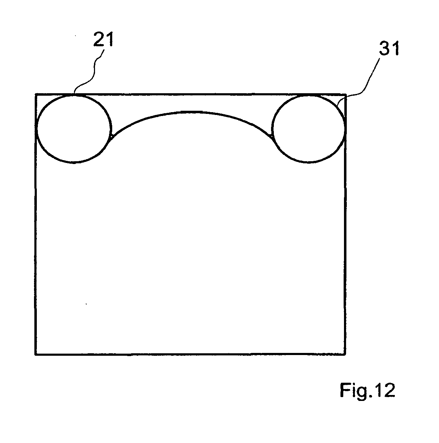

Fig.12 zeigt eine weitere Ausführungsform einer erfindungsgemäßen galvanische Zelle mit angepassten Elektroden 2, 3. Im Bereich einer Ecke ist eine Elektrode 2, 3 jeweils mit einem Kontaktelement 21, 31 versehen. Die Kontaktelemente 21, 31 erstrecken sich dabei nicht aus einem gedachten rechteckigen Außenumriss, welcher gestrichelt dargestellt ist. So wird neben der besonderes geschützten Anordnung der Kontaktelemente 21, 31 auch Bauraum eingespart.

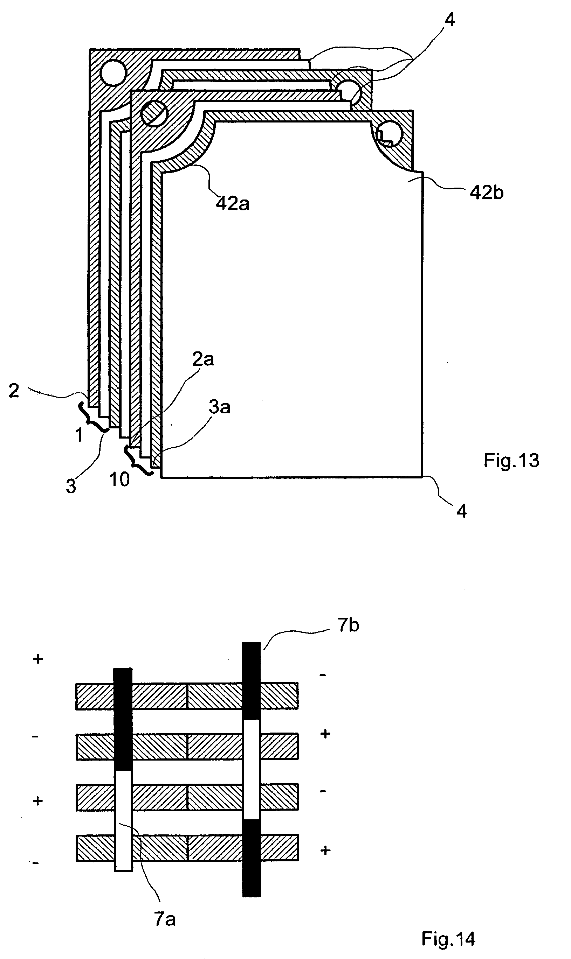

Fig.13 zeigt die Elektrodenstapel zweier galvanischen Zellen 1, 10. Die Umhüllungen der galvanischen Zellen 1, 10 sind nicht dargestellt. Die Elektrodenstapel sind im Wesentlichen gleichartig zusammengesetzt. Ein im Wesentlichen rechteckig ausgebildeter Separator 4 weist eine erste Ausnehmung 42a und eine zweite Ausnehmung 42b auf, welche an den oberen Ecken angeordnet sind. Eine im Wesentlichen rechteckig ausgebildete Elektrode 2, 2a, 3, 3a weist jeweils eine Ausnehmung auf, welche an einer Ecke angeordnet ist. Eine andere Ecke einer Elektrode weist einen Ausschnitt auf, welcher an den im Wesentlichen kreisförmigen Querschnitt einer Poldurchführung angepasst ist. Die Elektroden einer ersten Polarität überdecken im Wesentlichen eine erste Ausnehmung 42a der im Elektrodenstapel benachbarten Separatoren. Die Elektroden einer zweiten Polarität überdecken im Wesentlichen eine zweite Ausnehmung 42b der im Elektrodenstapel benachbarten Separatoren. Die die Ausnehmungen der Separatoren überdeckenden Bereiche von Elektroden weisen Ausschnitte auf, durch welche Poldurchführungen 7a, 7b verlaufen. In der Figur sind die galvanischen Zellen 1, 10 parallel geschaltet.

Fig.14 zeigt eine Parallelschaltung von vier galvanischen Zellen. Dabei ist jede zweite galvanische Zelle seitenverkehrt angeordnet. Die Poldurchführungen sind durch Ausschnitte in den Elektroden geführt. Eine Poldurchführung weist vorzugsweise wenigstens zwei stromleitende Bereiche auf, welche voneinander elektrisch isoliert sind.

## Patentansprüche

1. Galvanische Zelle (1,10), umfassend einen im Wesentlichen prismatischen Elektrodenstapel (5) mit wenigstens:
einer flächig ausgebildeten anodischen Elektrode (2), einer flächig ausgebildeten kathodischen Elektrode (3), und einem flächig ausgebildeten Separator (4), der zwischen diesen Elektroden (2, 3) derart angeordnet ist,
dass der Separator (4) an seinem Außenumriss wenigstens eine bezüglich dieses Außenumrisses nach innen versetzte Ausnehmung (42a, 42b) aufweist,
**dadurch gekennzeichnet, dass**
im Elektrodenstapel (5) wenigstens eine Elektrode (2, 3) diese Ausnehmung (42a, 42b) überdeckt.

2. Galvanische Zelle (1,10) nach Anspruch 1, **dadurch gekennzeichnet, dass** der Separator (4) wenigstens zwei Ausnehmungen (42a, 42b) aufweist, von denen im Elektrodenstapel (5) eine erste von einer anodischen Elektrode (2) und eine zweite von einer kathodischen Elektrode (3) überdeckt sind.

3. Galvanische Zelle (1,10) nach mindestens einem der vorherigen Ansprüche, **dadurch gekennzeichnet, dass** der Elektrodenstapel (5) eine Vielzahl von Separatoren (4) umfasst, deren Ausnehmungen (42a, 42b) abwechselnd und bevorzugt wechselseitig von einer anodischen Elektrode (2) und einer kathodischen Elektrode (3) überdeckt sind.

4. Galvanische Zelle (1, 10) nach mindestens einem der vorherigen Ansprüche,
**dadurch gekennzeichnet,**
**dass** die Elektroden (2, 3) und der Separator (4) an ihrem Außenumriss jeweils wenigstens eine bezüglich ihres Außenumrisses nach innen versetzte Ausnehmung (22, 22a, 22b, 32, 32a, 32b, 42a, 42b) aufweisen, welche im Elektrodenstapel (5) übereinanderliegend angeordnet sind.

5. Galvanische Zelle (1, 10) nach mindestens einem der vorherigen Ansprüche, **dadurch gekennzeichnet, dass** die Elektroden (2, 3) und der Separator (4) jeweils einen rechteckförmigen Außenumriss aufweisen, dass wenigstens eine Ausnehmung (22, 22a, 32, 32a, 42a) übereck ausgebildet ist und dass bevorzugt zwei Ausnehmungen (22, 22a, 22b, 32, 32a, 32b, 42a, 42b) übereck ausgebildet sind.

6. Galvanische Zelle (1, 10) nach mindestens einem der vorherigen Ansprüche, **dadurch gekennzeichnet, dass** wenigstens eine Ausnehmung (22, 22a, 22b, 32, 32a, 32b, 42a, 42b) eine bogenförmige Begrenzung aufweist, welche insbesondere konkav oder konvex verläuft.

7. Galvanische Zelle (1, 10) nach mindestens einem der Ansprüche 4 bis 6, **dadurch gekennzeichnet, dass** die im Elektrodenstapel (5) übereinander liegenden Ausnehmungen (22, 22a, 22b, 32, 32a, 32b, 42a, 42b) wenigstens einen Kanal ausbilden, in welchem wenigstens eine Poldurchführung (7a, 7b) angeordnet ist, wobei der Querschnitt einer Poldurchführung (7a, 7b) insbesondere an den Querschnitt des Kanals angepasst ist.

8. Galvanische Zelle (1, 10) nach einem der vorausgehenden Ansprüche, **dadurch gekennzeichnet, dass** die galvanische Zelle (1, 10) wenigstens einen Separator (4) aufweist, welcher bevorzugt aus einem stoffdurchlässigen Träger besteht, vorzugsweise teilweise stoffdurchlässig, also durchlässig in Bezug auf zumindest ein Material und undurchlässig in Bezug auf zumindest ein anderes Material,
wobei der Träger auf mindestens einer Seite mit einem anorganischen Material beschichtet ist,
wobei als stoffdurchlässiger Träger vorzugsweise ein organisches Material verwendet wird, welches vorzugsweise als nicht verwebtes Vlies ausgestaltet ist,
wobei das organische Material vorzugsweise ein Polymer und besonders bevorzugt Polyethylenterephthalat (PET) aufweist,
wobei das organische Material mit einem anorganischen ionenleitenden Material beschichtet ist, welches vorzugsweise in einem Temperaturbereich von -40°C bis 200°C ionenleitend ist,
wobei das anorganische, ionenleitende Material bevorzugt wenigstens eine Verbindung aus der Gruppe der Oxide, Phosphate, Sulfate, Titanate, Silikate, Aluminosolikate wenigstens eines der Elemente Zr, Al, Li ist, insbesondere Zirkonoxid, und
wobei das anorganische, ionenleitende Material bevorzugt Partikel mit einem größten Durchmesser unter 100 nm aufweist.

9. Galvanische Zelle (1, 10) nach mindestens einem der vorherigen Ansprüche, **dadurch gekennzeichnet, dass** der Separator (4) bezüglich der Außenumrisse der Elektroden (2, 3) übersteht, bevorzugt mit einem gleichmäßigen Überstand mit bis zu 5 mm, und insbesondere mit einem gleichmäßigen Überstand mit bis zu 3 mm.

10. Galvanische Zelle (1, 10) nach mindestens einem der vorherigen Ansprüche, **dadurch gekennzeichnet, dass** die galvanische Zelle (1, 10) eine Umhüllung (8, 9) mit einem Siegelbereich (99) aufweist, und dass der Siegelbereich (99) mit dem Elektrodenstapel (5), insbesondere mit dessen äußeren Elektroden (2, 3) insbesondere stoffschlüssig verbunden ist.

11. Galvanische Zelle (1, 10) nach Anspruch 10, **dadurch gekennzeichnet, dass** der Siegelbereich (99) unter Berücksichtigung wenigstens einer während des Betriebs der galvanischen Zelle (1, 10) auftretenden Beanspruchung ausgebildet ist.

12. Batterie mit wenigstens zwei galvanischen Zellen (1, 10) nach mindestens einem der Ansprüche 7 bis 11, **dadurch gekennzeichnet, dass** eine Poldurchführung (7a, 7b) mit den wenigstens zwei galvanischen Zellen (1, 10) elektrisch leitend verbunden ist.

## Claims

1. A galvanic cell (1, 10) having a substantially prismatic electrode stack (5) comprising at least:
one flat anode electrode (2), one flat cathode electrode (3), and one flat separator (4) arranged between said electrodes (2, 3) such that the outer contour of the separator (4) exhibits at least one recess (42a, 42b) inwardly offset with respect to said outer contour,
**characterized in that**
at least one electrode (2, 3) covers said recess (42a, 42b) in the electrode stack (5).

2. The galvanic cell (1, 10) according to claim 1, **characterized in that** the separator (4) exhibits at least two recesses (42a, 42b) of which one first said recess is covered by an anode electrode (2) and one second said recess is covered by a cathode electrode (3) in the electrode stack (5).

3. The galvanic cell (1, 10) according to at least one of the preceding claims, **characterized in that** the electrode stack (5) comprises a plurality of separators (4), the recesses (42a, 42b) of which are covered by an anode electrode (2) and a cathode electrode (3) in an alternating and preferentially reciprocating manner.

4. The galvanic cell (1, 10) according to at least one of the preceding claims,
**characterized in that**
the outer contours of the electrodes (2, 3) and the separator (4) each have at least one inwardly offset recess (22, 22a, 22b, 32, 32a, 32b, 42a, 42b) arranged on top of each other in the electrode stack (5).

5. The galvanic cell (1, 10) according to at least one of the preceding claims, **characterized in that** the electrodes (2, 3) and the separator (4) each have a rectangular outer contour, that at least one recess (22, 22a, 32, 32a, 42a) is formed diagonally around the edge and that preferentially two recesses (22, 22a, 22b, 32, 32a, 32b, 42a, 42b) are formed diagonally around the edge.

6. The galvanic cell (1, 10) according to at least one of the preceding claims, **characterized in that** at least one recess (22, 22a, 22b, 32, 32a, 32b, 42a, 42b) exhibits an arcuate boundary, particularly of concave or convex form.

7. The galvanic cell (1, 10) according to at least one of claims 4 to 6, **characterized in that** the recesses (22, 22a, 22b, 32, 32a, 32b, 42a, 42b) arranged on top of each other in the electrode stack (5) form at least one channel in which at least one pole bushing (7a, 7b) is arranged, wherein the cross section of a pole bushing (7a, 7b) is adapted in particular to the cross section of the channel.

8. The galvanic cell (1, 10) according to any one of the preceding claims, **characterized in that** the galvanic cell (1, 10) comprises at least one separator (4) preferentially consisting of a material-permeable substrate, preferably at least partially material-permeable; i.e. permeable with respect to at least one material and impermeable with respect to at least one other material,
wherein the substrate is coated on at least one side with an inorganic material,
wherein preferably an organic material preferably configured as nonwoven fabric is used as the material-permeable substrate,
wherein the organic material preferably comprises a polymer and particularly preferentially polyethylene terephthalate (PET),
wherein the organic material is coated with an inorganic ion-conductive material which is preferably ion-conductive in a temperature range of from -40°C to 200°C,
wherein the inorganic ion-conductive material is preferentially at least one compound from the group of oxides, phosphates, sulfates, titanates, silicates and aluminosilicates of at least one of the elements Zr, Al, Li, in particular zirconium oxide, and
wherein the inorganic ion-conductive material preferentially comprises particles having a largest diameter of less than 100 nm.

9. The galvanic cell (1, 10) according to at least one of the preceding claims, **characterized in that** the separator (4) protrudes relative to the outer contour of the electrodes (2, 3), preferentially at a uniform protrusion of up to 5 mm and particularly at a uniform protrusion of up to 3 mm.

10. The galvanic cell (1, 10) according to at least one of the preceding claims, **characterized in that** the galvanic cell (1, 10) comprises a casing (8, 9) having a sealing area (99) and that said sealing area (99) is connected, particularly bonded, to the electrode stack (5), particularly to its outer electrodes (2, 3).

11. The galvanic cell (1, 10) according to claim 10, **characterized in that** the sealing area (99) is formed in consideration of at least one load condition occurring during the operation of the galvanic cell (1, 10).

12. A battery comprising at least two galvanic cells (1, 10) according to at least one of claims 7 to 11, **characterized in that** a pole bushing (7a, 7b) is electroconductively connected to the at least two galvanic cells (1, 10).

## Revendications

1. Pile galvanique (1, 10), comprenant un empilement d'électrodes essentiellement prismatique (5) avec au moins :
une électrode anodique (2) de forme plate, une électrode cathodique (3) de forme plate et un séparateur (4) de forme plate qui est agencé entre ces électrodes (2, 3) de telle sorte que le séparateur (4) présente sur son périmètre extérieur au moins un évidement (42a, 42b) décalé vers l'intérieur par rapport à ce périmètre extérieur,
**caractérisée**
**en ce que** dans l'empilement d'électrodes (5), au moins une électrode (2, 3) recouvre cet évidement (42a, 42b).

2. Pile galvanique (1, 10) selon la revendication 1, **caractérisée en ce que** le séparateur (4) présente au moins deux évidements (42a, 42b), dont un premier est recouvert par une électrode anodique (2) et un deuxième est recouvert par une électrode cathodique (3) dans l'empilement d'électrodes (5).

3. Pile galvanique (1, 10) selon au moins l'une des revendications précédentes, **caractérisée en ce que** l'empilement d'électrodes (5) comprend une pluralité de séparateurs (4), dont les évidements (42a, 42b) sont recouverts en alternance, et de préférence de chaque côté respectivement par une électrode anodique (2) et une électrode cathodique (3).

4. Pile galvanique (1, 10) selon au moins l'une des revendications précédentes,
**caractérisée**
**en ce que** les électrodes (2, 3) et le séparateur (4) présentent sur leur périmètre extérieur, respectivement, au moins un évidement (22, 22a, 22b, 32, 32a, 32b, 42a, 42b) décalé vers l'intérieur par rapport à leur périmètre extérieur, lesquels sont agencés l'un au-dessus de l'autre dans l'empilement d'électrodes (5).

5. Pile galvanique (1, 10) selon au moins l'une des revendications précédentes, **caractérisée en ce que** les électrodes (2, 3) et le séparateur (4) présentent respectivement un périmètre extérieur de forme rectangulaire, **en ce qu'**au moins un évidement (22, 22a, 32, 32a, 42a) est réalisé dans un angle et **en ce que** de préférence, deux évidements (22, 22a, 22b, 32, 32a, 32b, 42a, 42b) sont réalisés dans un angle.

6. Pile galvanique (1, 10) selon au moins l'une des revendications précédentes, **caractérisée en ce qu'**au moins un évidement (22, 22a, 22b, 32, 32a, 32b, 42a, 42b) présente une délimitation de forme arquée, qui s'étend en particulier de façon concave ou convexe.

7. Pile galvanique (1, 10) selon au moins l'une des revendications 4 à 6, **caractérisée en ce que** les évidements (22, 22a, 22b, 32, 32a, 32b, 42a, 42b) se trouvant l'un au-dessus de l'autre dans l'empilement d'électrodes (5) forment au moins un conduit dans lequel est agencé une traversée de borne (7a, 7b), étant entendu que la section d'une traversée de borne (7a, 7b) est en particulier adaptée à la section du conduit.

8. Pile galvanique (1, 10) selon l'une des revendications précédentes, **caractérisée en ce que** la pile galvanique (1, 10) présente au moins un séparateur (4) qui est de préférence constitué d'un support perméable aux substances, de préférence partiellement perméable aux substances, c'est-à-dire perméable par rapport à au moins un matériau et imperméable par rapport à au moins un autre matériau,
étant entendu que le support est revêtu sur au moins un côté d'un matériau anorganique,
étant entendu qu'on utilise de préférence comme support perméable aux substances un matériau organique, qui est de préférence réalisé comme tissu non tissé,
étant entendu que le matériau organique présente de préférence un polymère, et de façon particulièrement préférée un polyéthylène téréphtalate (PET),
étant entendu que le matériau organique est revêtu d'un matériau conducteur ionique anorganique, qui est de préférence conducteur ionique dans une marge de températures de -40 °C à 200 °C,
étant entendu que le matériau conducteur ionique anorganique est de préférence au moins un composé d'au moins un des éléments Zr, Al, Li du groupe des oxydes, des phosphates, des sulfates, des titanates, des silicates et des aluminosilicates, en particulier l'oxyde de zirconium, et
étant entendu que le matériau conducteur ionique anorganique présente de préférence des particules d'un diamètre maximal inférieur à 100 nm.

9. Pile galvanique (1, 10) selon au moins l'une des revendications précédentes, **caractérisée en ce que** le séparateur (4) dépasse par rapport aux périmètres extérieurs des électrodes (2, 3), de préférence d'un dépassement uniforme allant jusqu'à 5 mm, et en particulier d'un dépassement uniforme allant jusqu'à 3 mm.

10. Pile galvanique (1, 10) selon au moins l'une des revendications précédentes, **caractérisée en ce que** la pile galvanique (1, 10) présente une enveloppe (8, 9) avec une zone de scellement (99) et **en ce que** la zone de scellement (99) est reliée avec l'empilement d'électrodes (5), en particulier avec ses électrodes extérieures (2, 3), en particulier par une jonction de leurs substances.

11. Pile galvanique (1, 10), selon la revendication 10, **caractérisée en ce que** la zone de scellement (99) est conçue en prenant en considération au moins une contrainte survenant pendant l'utilisation de la pile galvanique (1, 10).

12. Batterie comprenant au moins deux piles galvaniques (1, 10) selon au moins l'une des revendications 7 à 11, **caractérisée en ce qu'**une traversée de borne (7a, 7b) est reliée avec les au moins deux piles galvaniques (1, 10) de façon conductrice de l'électricité.
